# EUROPEAN PATENT APPLICATION

(11) **EP 4 745 624 A1**
(43) Date of publication of application: **20.05.2026**
(21) Application number: 23945803.7
(22) Date of filing: 14.07.2023
(51) Int. Cl.: G01S 13/28, G01S 13/90

(54) **OBJECT DETECTING DEVICE, OBJECT DETECTING METHOD, AND PROGRAM**

(71) Applicant: Sky Perfect JSAT Corporation, Tokyo 107-0052 (JP)
(72) Inventor: ANAHARA, Takuma, Tokyo 107-0052 (JP)
(74) Representative: Wright, Howard Hugh Burnby
(86) International application number: PCT/JP2023/026122
(87) International publication number: WO 2025/017798

(57) **Abstract**

The present disclosure provides an object detection device, including: a transceiver unit configured to repeatedly transmit radio waves toward Earth's surface and receive reflected signals, while traveling; a pattern identifying unit configured to identify a shape of a peak pattern formed by reflection intensity peaks in each of the received signals; and a position finding unit configured to determine the position of a target object based on the shape of the peak pattern. According to the present disclosure, detection of objects on the Earth's surface can be performed with less computational load than conventional methods.

## Description

### [Technical Field]

The present invention relates to an object detection device, an object detection method, and a program.

### [Background Art]

One example of an object of the observation of the Earth's surface from artificial satellites (spacecrafts) is to determine positions of marine vessels at sea. The observation of the Earth's surface from artificial satellites is performed using synthetic-aperture radar (SAR) that utilizes microwaves. By using microwaves, it becomes possible to observe the Earth's surface even when there are clouds or during nighttime. The synthetic-aperture radar is a type of radio wave sensor that observes the Earth's surface by transmitting radio waves (microwaves) toward the ground and receiving the reflected waves. As it moves along its orbit, SAR repeatedly transmits radio waves toward the ground and synthesizes the reflected signals from the same location, enabling it to produce high-resolution images comparable to those obtained with a large-sized antenna, even when using a small-sized antenna.

### [Citation List]

### [Patent Literature]

[PTL 1] Japanese Patent Application Publication No. 2003-90880

### [Summary of Invention]

### [Technical Problem]

Image generation through synthetic-aperture processing requires an enormous amount of computation, which consumes a huge portion of the satellite's valuable computation resources. Specifically, azimuth compressing processing must be performed for each position (pixel), and obtaining high-resolution (high-pixel) images demands an extremely large amount of computation.

Alternatively, it is possible to transmit the received wave data to the ground and perform synthetic-aperture processing there. While this approach can save computational resources on the satellite, it consumes a large amount of communication resources. Since communication resources are as valuable as computational resources, this approach does not provide an effective solution.

An object of the present invention is to provide a technique for detecting objects on the Earth's surface with less computational load than conventional techniques.

### [Solution to Problem]

One aspect of the present invention is based on an idea that if it is known in advance that the target object to be detected is located on the Earth's surface with low radio wave reflectance, then strong reflected signals can be obtained only from the object itself, making it possible to determine the object's location without performing imaging through synthetic-aperture processing. It should be noted that the terms "Earth's surface" or "ground surface" as used in this disclosure refer not only to the surface of the land of the Earth, but also to the water surface in areas such as oceans, rivers, and lakes.

Specifically, an aspect of the present invention is an object detection device, including a transceiver unit configured to repeatedly transmit radio waves toward Earth's surface and receive reflected signals, while traveling, a pattern identifying unit configured to identify a shape of a peak pattern formed by reflection intensity peaks in each of the received signals, and a position finding unit configured to determine the position of an object based on the shape of the peak pattern.

The peaks of reflected signals from any point on the ground form a predetermined shape, approximately a parabola, within data space defined by the axes of transmission position (transmission time) and the time difference between transmission and reception, and are approximately recorded along the parabolic curve. The shape of the parabola is determined by factors including but not limited to the relative position between the radio wave transmission point and the above-mentioned ground point, and the velocity of the object detection device. Conversely, once the shape of the reflection intensity peaks is known, the corresponding location on the ground can be determined. If the Earth's surface is an area with low reflectance, a strong reflected signal indicates the likely presence of a target object. Therefore, it is possible to determine the position of the target object through simple processing, without the need for computationally intensive synthetic-aperture processing for all pixels.

In one aspect of the present invention, the pattern identifying unit may identify the peak pattern as a parabola. While the shape of the parabola can be determined by its vertex, axis, and curvature, the axis approximately coincides with the range direction. Therefore, the pattern identifying unit may be configured to determine only the vertex and the curvature.

In one aspect of the present invention, the pattern identifying unit may identify the shape of the peak pattern after applying range compression processing to the received signals. Range compression improves resolution in the range direction. In another aspect of the present invention, the pattern identifying unit may identify the shape of the peak pattern based on the received signals prior to range compression processing. Even without range compression, the intensity peak pattern exhibits a distinctive shape, from which the position of the target object can be determined.

In one aspect of the present invention, the device may further include a synthetic aperture processing unit configured to perform synthetic aperture processing on a partial region including the position of the target object determined by the position finding unit, and to generate an image of the partial region. Through this synthetic aperture processing, the target object can be visualized, allowing its type and condition to be visually determined. In this case, by generating an image only for the partial region in which the target object is present, rather than for the entire area irradiated by the radio waves, the amount of computation required can be significantly reduced.

In one aspect of the present invention, the target object may be an object located on a surface with low reflectance to the radio waves, and in particular, may be a marine vessel located on the sea.

In one aspect of the present invention, the object detection device may be mounted on a spacecraft (artificial satellite) traveling in orbit around the Earth, or may be configured integrally with the spacecraft. The orbit of the spacecraft is not particularly limited, but is typically low Earth orbit at an altitude in the range of 200 to 1000 km. In another aspect of the present invention, the object detection device may be mounted on a manned or unmanned aircraft, or may be configured integrally with the aircraft.

In another aspect of the present invention, an object detection method is provided, the method comprising: a transmission/reception step of repeatedly transmitting radio waves toward the Earth's surface from an object detection device while traveling, and receiving reflected signals by the object detection device; a pattern identifying step of identifying a shape of a peak pattern formed by reflection intensity peaks in each of the received signals; and a position finding step of determining the position of a target object based on the shape of the peak pattern.

In another aspect of the present invention, a computer program is provided for causing a computer to execute each step of the above-described method.

### [Advantages of Invention]

According to the present invention, detection of objects on the Earth's surface can be performed with less computational load than conventional methods.

### [Brief Description of Drawings]

[Fig. 1] Fig. 1 is a configuration diagram of a spacecraft according to an embodiment.
[Fig. 2] Figs. 2(A) and 2(B) are diagrams for illustrating transmission/reception of radio waves by the spacecraft.
[Fig. 3] Fig. 3 is a flowchart showing a flow of object detection processing by the spacecraft.
[Fig. 4] Fig. 4(A) is a diagram showing received reflected waves, Fig. 4(B) is a diagram showing reflection intensity peaks, and Fig. 4(C) is a diagram showing a peak pattern.

### [Description of Embodiments]

One embodiment of the present invention is a spacecraft (artificial satellite) that travels in low Earth orbit (LEO) and has functions of determining the positions of marine vessels present on the ocean. In other words, the spacecraft of present embodiment is an example of an object detection device according to the present invention. It should be noted that the following description is made based on one embodiment, and is not intended to limit the present invention to the contents thereof. For example, the object detection device may be a moving object or a flying object other than a spacecraft, detection objects may be physical objects other than marine vessels, and radio waves used may have a wavelength other than microwaves.

### [Configuration]

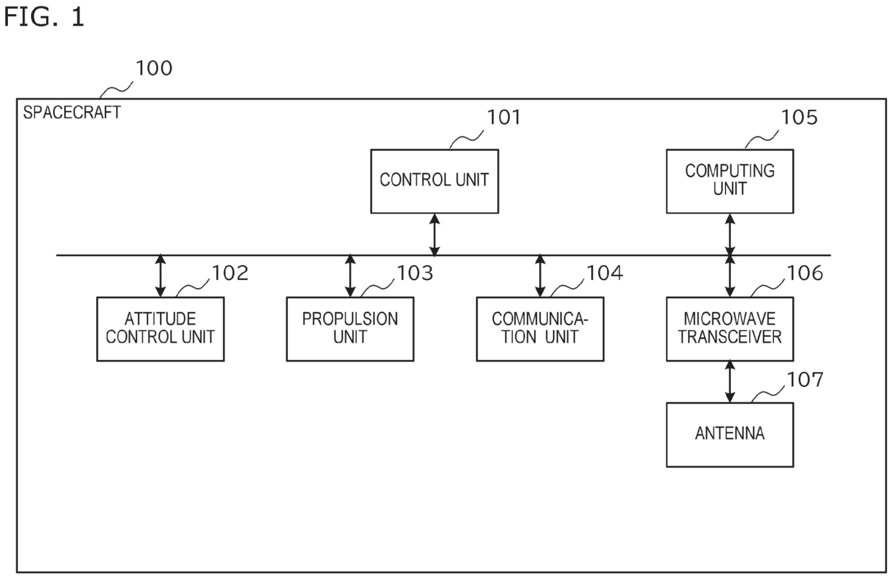

Fig. 1 is a diagram illustrating a configuration of a spacecraft 100 according to the present embodiment. The spacecraft 100 has a radar transceiver and an antenna for transmitting microwave pulses, and while traveling along its orbit, it transmits and receives microwave pulses to determine positions of marine vessels at sea or to obtain images of the marine vessels from the received signals. The spacecraft 100 is equipped with a control unit 101, an attitude control unit 102, a propulsion unit 103, a communication unit 104, a computing unit 105, a microwave transceiver 106, and an antenna 107.

The control unit 101 is a computer including a processor, a main storage device, and an auxiliary storage device, and controls various parts of the spacecraft 100 through the processor, which loads programs stored in the auxiliary storage device into the main storage device and execute them. The control unit 101 performs, in particular, control operations such as changing the orbital path and controlling the observation of the Earth's surface. Note that part or all of the functions provided by the control unit 101 may be implemented by dedicated hardware circuits.

The attitude control unit 102 controls the attitude of the spacecraft 100 using a reaction wheel. Specifically, the attitude of the spacecraft 100 is controlled by changing the angular momentum of the flywheel. The attitude control unit 102 may also control the attitude of the spacecraft 100 using thrusters dedicated for attitude control.

The propulsion unit 103 generates thrust to make fine adjustment to the orbital path of the spacecraft 100. The propulsion unit 103 may be, for example, a rocket thruster that generates propulsion force by expelling gas produced through chemical reactions of fuel.

The communication unit 104 is a functional unit for communicating with a communication device on the ground. Through the communication unit 104, the spacecraft 100 transmits the results of Earth's surface observation, such as positions of marine vessels and images of the marine vessels, to the communication device on the ground.

The computing unit 105 is a computer including a processor, a main storage device, and an auxiliary storage device, and performs detection of target objects and imaging processing by loading a program stored in the auxiliary storage device into the main storage device and executing the program. The details of processing performed by the computing unit 105 will be described later with reference to a flowchart. Note that part or all of the functions provided by the computing unit 105 may also be implemented by dedicated hardware circuits.

The microwave transceiver 106 transmits microwave pulses and receives the reflected waves (reflected signals) thereof. The microwave transceiver 106 includes a signal processing unit, a transmission unit, and a reception unit. The signal processing unit comprises such as a pulse generation control unit, an AD conversion unit, and a received wave recording unit. The transmission and reception unit includes a frequency oscillator, a chirp oscillator, and a high-power amplifier, and it supplies the generated chirp signal to the antenna 107. The reception unit includes a low-noise amplifier, a gain control unit, and a detector unit, and performs wave detection from received signals obtained via the antenna 107.

### [Overview of Synthetic Aperture Radar]

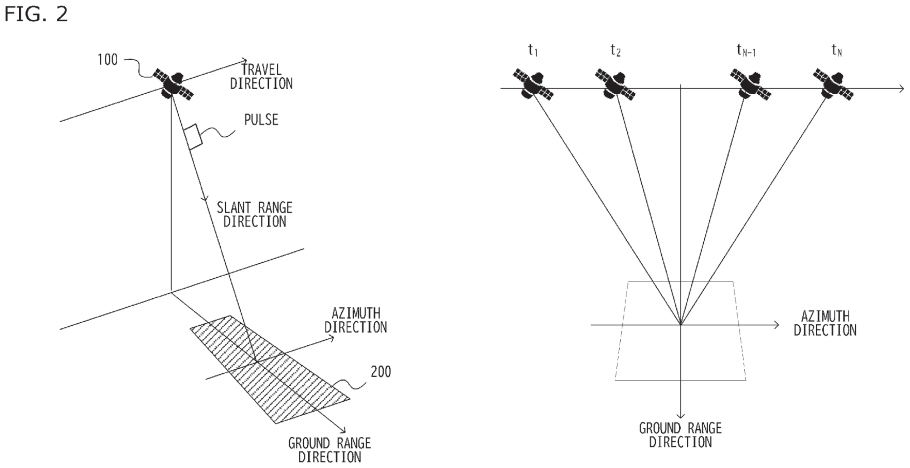

The overview of synthetic-aperture radar (conventional art) will be described with reference to Fig. 2. As illustrated in Fig. 2(A), the spacecraft 100 uses a method called side-looking, in which it transmits a microwave beam obliquely downward direction when observing the Earth's surface. The direction in which the microwave beam is transmitted is called the slant range direction, and a ground surface component of the slant range direction is referred to as the ground range direction (hereinafter, ground range direction will be referred to simply as range direction). The direction of travel of the spacecraft 100 is referred to as an azimuth direction. The coverage area of a single microwave beam forms a trapezoidal shape, as represented by region 200.

The resolution in the range direction depends on the pulse width of the microwave beam; the shorter the pulse width, the higher the resolution. Therefore, the spacecraft 100 employs a technique called pulse compression to achieve higher resolution. Specifically, the spacecraft 100 transmits chirped pulses in which relatively long pulses are frequency-modulated, and then performs convolution integration of the received signals with a reference signal (the transmission signal) to effectively shorten the pulse width.

The resolution in the azimuth direction depends on the beamwidth of the microwave beam, which in turn depends on the antenna width. The larger the antenna width, the higher the azimuth resolution. High resolution can also be achieved by using microwaves with short wavelengths, such as X-band; however, to achieve comparable resolution using longer-wavelength microwaves such as L-band, an antenna of impractically large size would be required for installation on the spacecraft 100. To address this, synthetic aperture technology is used. This technique processes signals received by a moving antenna to generate high-resolution observation results as if a long virtual antenna had been used. As expected, synthetic aperture processing enables high resolution regardless of the microwave wavelength, and it is also effective when using X-band microwaves. As shown in Fig. 2(B), the spacecraft 100 moves in the azimuth direction (the direction of travel) while repeatedly transmitting and receiving pulses. The time difference between pulse transmission and reception from a target varies approximately in proportion to the square of the distance as a function of azimuth position (transmission time), and the spacecraft 100 records this variation as the phase of the received signal. Received signals from the same location appear at specific positions corresponding to predetermined transmission-reception time differences in each reflected signal. Therefore, by synthesizing received signals from the same location, it is possible to obtain images with high resolution in azimuth. This processing is called azimuth compression.

Observation modes in synthetic aperture radar include the stripmap mode, spotlight mode, and scan mode. The stripmap mode is a mode in which the direction of the microwave beam relative to the spacecraft 100 is fixed, and the beam-illuminated area moves along with the spacecraft 100's motion. The spotlight mode is a mode in which the relative beam direction is adjusted so that the beam continuously illuminates the same area. The scan mode is a mode in which the beam direction is shifted in the range direction as the spacecraft 100 moves. The spacecraft 100 according to the present embodiment may use any of these observation modes.

### [Object Position Finding Processing]

The aforementioned azimuth compression processing is generally performed as convolution integration in the frequency domain to speed up the processing. However, even with this approach, performing azimuth compression over the entire observation area still requires a significant amount of computation, resulting in the consumption of the spacecraft 100's valuable computational resources.

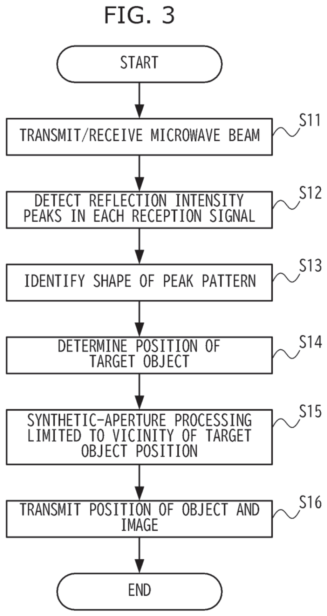

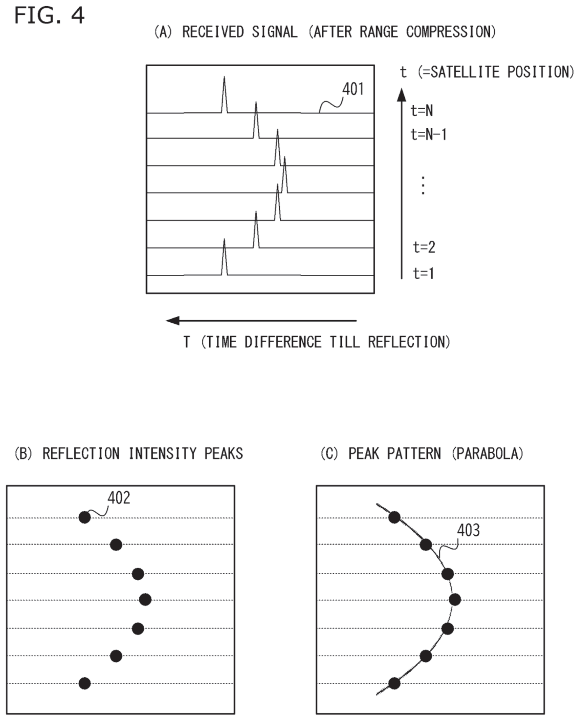

For example, in response to the need to observe the ocean and determine the positions of objects (such as marine vessels) present on the sea surface, it is not necessary to generate an image of the entire observation area, and the computationally intensive azimuth compression processing is not always required. In the present embodiment, the position of a target object is determined through simplified calculations. Below, the object position finding process in this embodiment will be explained with reference to Fig. 3 and Fig. 4.

Fig. 3 shows a flowchart for the object position finding process in the present embodiment. This object position finding process takes place while the spacecraft 100 is traveling along a predetermined orbit, such as low Earth orbit.

In step S11, the control unit 101 controls the microwave transceiver 106 to repeatedly transmit radio waves toward the Earth's surface and receive the reflected signals. The microwave transceiver 106 generates a microwave beam composed of chirped pulses, transmits it via the antenna 107, and receives the reflected signals from the Earth's surface through the antenna 107. The microwave transceiver 106 sends the received signals to the computing unit 105, which stores them in the storage unit. The computing unit 105 may also apply the aforementioned range compression processing to the received signals.

The microwave transceiver 106 and the antenna 107 that perform the processing in step S11 correspond to a transceiver unit according to the present invention.

Fig. 4(A) schematically illustrates the received signal 401 after range compression of the reflected signal. In this figure, the vertical axis represents the transmission time t of the microwave beam (corresponding to the position of the spacecraft 100), the horizontal axis represents the time difference T from each transmission time of the microwave beam **(i.e.,** the time until the reflected wave is received), and the Z-axis represents the reflection intensity. At positions where marine vessels (or other objects) are present, whose microwave reflectance is higher than that of the surrounding sea, strong peaks appear in the received signal 401. These peaks form a distinctive pattern (approximately parabolic) on a plane defined by t and T. Note that even before range compression, similar distinctive peak patterns in reflection intensity can be obtained, so the process may proceed in step S11 without performing range compression.

In step S12, the computing unit 105 determines the position of the intensity peak (time difference T) in each received signal. This processing can be implemented using any existing peak detection algorithm for time-series data.

Fig. 4(B) is a diagram showing the peaks 402 in each received signal, as detected in step S12.

In step S13, the computing unit 105 identifies the shape of the pattern formed by the peaks detected in step S12. As described above, the pattern of intensity peaks approximates a parabolic shape, and thus the computing unit 105 identifies the parabola connecting the peaks. Since the shape of a parabola is defined by its vertex, curvature, and axis, the computing unit 105 determines these parameters. This process may be carried out, for example, using a curve fitting algorithm such as the least squares method.

Fig. 4(C) is a diagram showing an example of the peak pattern 403 identified in step S13.

It should be noted that Fig. 4(A) to Fig. 4(C) illustrate an example in which only one target object is present in the observation area. When multiple target objects are present in the observation area, overlapping peaks, in which multiple peak patterns are superimposed, are obtained. The computing unit 105 may extract and identify the shape of each individual peak pattern under the constraint that each peak pattern forms a parabola.

The computing unit 105 performing the processing in step S12 and step S13 corresponds to a pattern identifying unit according to the present invention.

In step S14, the computing unit 105 determines the position of the target object corresponding to the peak pattern identified in step S13, based on the shape of the peak pattern. The shape of a peak pattern corresponding to a specific location on the Earth's surface is determined by factors such as the relative positional relationship with the spacecraft 100 and the velocity of the spacecraft 100. Conversely, by analyzing the shape of the peak pattern, one can determine the corresponding position on the Earth's surface. For example, the computing unit 105 can determine the observation position of the spacecraft 100 using precise time and position information obtained from a positioning satellite system such as GPS, determine the distance from the observation position to the Earth's surface based on the time difference between transmission and reception, and then determine the target object's position on the Earth's surface from these measurements. The computing unit 105 may determine the target object's position on the Earth's surface based on the vertex position of the parabola, or alternatively, as described later, may perform limited azimuth compression and determine the position based on the result. Alternatively, the computing unit 105 may determine the position of the target object on the Earth's surface based on the ground position corresponding to the observation position of the spacecraft, and on the vertex position and curvature of the parabola on the t-T plane.

The computing unit 105 performing the processing in step S14 corresponds to a position finding unit according to the present invention.

In step S15, the computing unit 105 performs synthetic aperture processing limited to the vicinity of the target object's position determined in step S14, and obtains an image of the area surrounding the target object. Specifically, the computing unit 105 may restrict the processing area to a rectangular region of a predetermined size centered on the target object's position, and apply azimuth compression processing only within this limited region. The predetermined size may be determined according to system requirements; however, it is preferable that the area be large enough to capture the entire target object so that its type and condition can be identified. For example, in the case of a marine vessel as the target, an area of 500 meters square is generally considered sufficient. If only the position finding of the target object is required and the image is unnecessary, the processing in step S15 may be omitted.

The computing unit 105 performing the processing in step S15 corresponds to a synthetic-aperture processing unit according to the present invention.

In step S16, the position of the target object determined in step S14 and the image of the vicinity of the object obtained in step S15 are transmitted to a ground-based or an airborne device, via the communication unit 104. The destination of the transmission is not particularly limited.

### [Advantages of Present Embodiment]

According to the present embodiment, the position of a target object can be determined from the peak pattern of the received signals without performing computationally intensive synthetic aperture processing, thereby reducing the computational load required for position finding. Furthermore, when obtaining an image of the target object, synthetic aperture processing is performed only in the vicinity of the target object, making it possible to acquire the necessary image with less computation than generating an image of the entire observation area. In addition, since the image is limited to the area around the target object, the amount of data transmitted from the spacecraft can also be reduced.

### [Reference Signs List]

- 100: Spacecraft
- 101: Control unit
- 102: Attitude control unit
- 103: Propulsion unit
- 104: Communication unit
- 105: Computing unit
- 106: Microwave transceiver unit
- 107: Antenna

## Claims

1. An object detection device, comprising:
a transceiver unit configured to repeatedly transmit radio waves toward Earth's surface and receive reflected signals, while traveling;
a pattern identifying unit configured to identify a shape of a peak pattern formed by reflection intensity peaks in each of the received signals; and
a position finding unit configured to determine a position of a target object based on the shape of the peak pattern.

2. The object detection device according to claim 1, wherein the pattern identifying unit is configured to identify the peak pattern as a parabola.

3. The object detection device according to claim 1, wherein the pattern identifying unit is configured to apply range compression processing to the received signals prior to identifying the shape of the peak pattern.

4. The object detection device according to claim 1, further comprising a synthetic-aperture processing unit configured to perform synthetic-aperture processing on a partial region including the position of the target object determined by the position finding unit, and to generate an image of the partial region.

5. The object detection device according to claim 1, wherein the target object is an object that is located on Earth's surface with low reflectance to the radio waves.

6. The object detection device according to claim 1, wherein the target object is a marine vessel located on sea.

7. An object detection method, comprising:
a transmission/reception step of repeatedly transmitting radio waves toward Earth's surface from an object detection device and receiving reflected signals with the object detection device, while traveling;
a pattern identifying step of identifying a shape of a peak pattern formed by reflection intensity peaks in each of the received signals; and
a position finding step of determining a position of a target object based on the shape of the peak pattern.

8. The object detection method according to claim 7, wherein the pattern identifying step includes identifying the peak pattern as a parabola.

9. The object detection method according to claim 7, wherein the pattern identifying step includes applying range compression processing to the received signals prior to identifying the shape of the peak pattern.

10. The object detection method according to claim 7, further comprising a synthetic-aperture processing step of performing synthetic-aperture processing on a partial region including the position of the target object identified in the position finding step, and generating an image of the partial region.

11. The object detection method according to claim 7, wherein the target object is an object that is located on Earth's surface with low reflectance to the radio waves.

12. The object detection method according to claim 7, wherein the target object is a marine vessel located on sea.

13. A program for causing a computer to execute the steps of the method according to any one of claims 7 to 12.
